# FASCICULE DE BREVET EUROPEEN

(11) **EP 1 641 608 B1**
(45) Date de publication et mention de la délivrance du brevet: **13.12.2017**
(21) Numéro de dépôt: 04767525.1
(22) Date de dépôt: 30.06.2004
(51) Int. Cl.: B29C 44/34

(54) **PROCEDE DE PREPARATION DE PERLE A BASE DE POLYMERE EXPANSE**
VERFAHREN ZUR HERSTELLUNG VON AUF GESCHÄUMTEM POLYMER BASIERENDEN PERLEN
METHOD FOR PREPARING BEADS BASED ON EXPANDED POLYMER

(30) Priorité: 04.07.2003 FR 0308210
(43) Date de publication de la demande: 05.04.2006
(73) Titulaire: Rhodia Opérations, 93306 Aubervilliers (FR)
(72) Inventeur: ESTUR, Jean-François, F-69230 SAINT-GENIS LAVAL (FR); ROCHE, Eric, F-38200 LUZINAY (FR); BRIOIS, Jean-François, F-62130 CROIX-EN-TERNOIS (FR)
(74) Mandataire: Benvenuti, Federica
(86) Numéro de dépôt international: PCT/FR2004/001681
(87) Numéro de publication internationale: WO 2005/011952

(56) Documents cités:
- EP-A- 0 450 205
- WO-A-03/053651
- CH-A5- 646 096
- DE-A- 10 226 202
- US-A- 5 000 891
- US-B1- 6 315 931

## Description

La présente invention concerne un procédé de préparation d'une perle à base de polymère expansé.

Les matériaux synthétiques expansés sont utilisés dans de nombreux domaines, tels que l'isolation thermique ou phonique, la sellerie etc.

On distingue essentiellement deux types de matériaux expansés, également appelés mousses : les mousses structurelles et les mousses non structurelles.

Les mousses structurelles sont des mousses rigides composées d'un coeur de faible densité et d'une peau dont la densité est proche de celle du polymère composant la matrice. Ces mousses peuvent être utilisées comme structures allégées dans le domaine de l'aéronautique ou de l'automobile par exemple.

Les mousses non structurelles peuvent être flexibles ou rigides. Les mousses rigides sont utilisées dans le domaine de l'isolation thermique (le gaz présent dans les cellules joue le rôle d'isolant). Les mousses flexibles sont utilisées dans le domaine de l'ameublement et de la sellerie, pour leurs propriétés de compressibilité et d'amortissement, dans le domaine de l'emballage en raison de leur faible poids, ainsi que dans le domaine de l'isolation phonique (les mousses présentant une porosité ouverte ont la particularité d'absorber certaines fréquences).

On connaît différentes méthodes pour obtenir des mousses de polymère thermoplastique, telles que des mousses de polystyrène, de PVC, de polyéthylène, de polypropylène, etc, et notamment des mousses de polyamide.

Il est connu d'injecter des gaz sous pression dans le polymère à l'état fondu.

Il est également connu d'incorporer des porophores -charges instables thermiquement- dans le polymère à l'état fondu, qui libèrent un gaz lors de leur décomposition.

Il est également possible de dissoudre ou de disperser des composés dans le polymère à l'état fondu, la mousse étant obtenue par volatilisation de ces composés.

Enfin, il est connu d'obtenir des mousses à l'aide d'une réaction chimique dégageant du gaz, comme du dioxyde de carbone. C'est le cas par exemple des mousses polyuréthane obtenues par réaction entre des isocyanates, des polyols et de l'eau conduisant à la formation de polyuréthane avec libération de dioxyde de carbone.

Des mousses de polyamide peuvent également être obtenues par voie chimique, en mettant en présence des isocyanates et des lactames ainsi que des bases pour activer la polymérisation anionique.

Ces mousses de polymère thermoplastique, et notamment les mousses de polyamide, sont généralement mises en forme par moulage, par exemple par injection-moulage. Les articles ainsi obtenus sont généralement utilisés tels quels pour diverses applications.

Or pour certaines applications, le matériau en polymère expansé est introduit au sein d'autres matériaux. C'est le cas notamment dans le domaine des matériaux allégés, de type béton allégé. On recherche dans ce type d'applications un matériau expansé sous une forme aisément manipulable, dispersible dans la matrice etc. Des charges aciculaires sont connues pour ce type d'application. Mais leur forme est pénalisante notamment en terme de viscosité lors de leur introduction dans la matrice, ce qui limite par exemple la quantité de charges qu'il est possible d'incorporer dans la matrice. La forme sphérique des charges incorporées par exemple dans le béton, présente donc un avantage ; elles permettent en outre une optimisation de l'empilement dans le matériau.

De plus, pour certaines applications spécifiques telles que les bétons allégés, on recherche un article en matériau expansé présentant une porosité fermée. Ceci afin d'éviter notamment une absorption d'eau par l'article en matériau expansé, lors de la préparation du béton.

Le document CH 646 096 A5 décrit un procédé de préparation d'une perle à base de polyamide expansé selon le préambule de la revendication 1. La présente invention propose dans un premier objet un procédé de préparation d'une perle à base de polymère expansé et à peau continue, selon la revendication 1.

Par perle on entend un article de petite taille dont la plus grande dimension est inférieure ou égale à 15 mm. De préférence on entend par perle un article sphérique ou essentiellement sphérique.

Par perle à peau continue, on entend une perle ne présentant pas de porosité de surface. De préférence on entend par perle à peau continue une perle ne présentant pas de porosité par observation au microscope électronique à balayage jusqu'à un grossissement d'au moins 5000.

Tout polymère thermoplastique peut être mis en oeuvre dans le cadre de l'invention. A titre d'exemple de polymère thermoplastique, on peut citer les polyamides, les polyesters, les polyuréthanes, les polyoléfines telles que le polyéthylène ou le polypropylène, le polystyrène etc.

Selon l'invention, le polymère thermoplastique est un polyamide.

Tout polyamide connu de l'homme du métier peut être utilisé dans le cadre de l'invention. Le polyamide est généralement un polyamide du type de ceux obtenus par polycondensation à partir de diacides carboxyliques et de diamines, ou du type de ceux obtenus par polycondensation de lactames et/ou aminoacides. Le polyamide de l'invention peut être un mélange de polyamides de différents types et/ou du même type, et/ou des copolymères obtenus à partir de différents monomères correspondant au même type et/ou à des types différents de polyamide.

A titre d'exemple de polyamide pouvant convenir pour l'invention, on peut citer le polyamide 6, le polyamide 6,6, le polyamide 11, le polyamide 12, les polyamides 4,6 ; 6,10; 6,12; 12,12, 6,36; les polyamides semi-aromatiques, par exemple les polyphtalamides obtenus à partir d'acide téréphtalique et/ou isophtalique tels que le polyamide commercialisé sous le nom commercial AMODEL, leurs copolymères et alliages.

Selon un mode de réalisation préférentiel de l'invention, le polyamide est choisi parmi le polyamide 6, le polyamide 6,6, leurs mélanges et copolymères.

Tout composition expansible comprenant un polymère thermoplastique et un agent d'expansion peut être utilisée dans le cadre de l'invention, ainsi que toute méthode pour la préparer.

Selon un premier mode de réalisation particulier qui ne fait pas partie du procédé de l'invention, l'agent d'expansion est un gaz pouvant se disperser ou se dissoudre dans le polymère à l'état fondu. La composition selon ce mode de réalisation est généralement préparée par introduction du gaz dans le polymère fondu, selon une méthode connue de l'homme du métier. Tout gaz connu de l'homme du métier pouvant se disperser ou se dissoudre dans le polymère de l'invention peut être utilisé. Le gaz est de préférence inerte. On peut citer comme exemple de gaz convenable dans le cadre de l'invention l'azote, le dioxyde de carbone, le butane etc.

Selon un deuxième mode de réalisation particulier qui ne fait pas partie du procédé de l'invention, l'agent d'expansion est un agent porogène. Tout agent porogène connu de l'homme du métier peut être utilisé. Il est introduit dans le polymère selon une méthode connue de l'homme du métier. On peut citer comme exemple d'agent porogène le diazocarbonamide. Selon ce mode particulier, la température lors de l'étape a) est de préférence supérieure ou égale à la température de décomposition de l'agent porogène.

Selon un troisième mode de réalisation particulier qui ne fait pas partie du procédé de l'invention, l'agent d'expansion est un composé volatile pouvant se dissoudre dans le polymère à l'état fondu. La composition selon ce mode de réalisation est généralement préparée par introduction du composé volatile dans le polymère fondu, selon une méthode connue de l'homme du métier. Tout composé volatile connu de l'homme du métier pouvant se dissoudre dans le polymère de l'invention peut être utilisé. On peut citer comme exemple de composé volatile convenable dans le cadre de l'invention le butanol.

Selon le procédé de l'invention, l'agent d'expansion est un composé chimique pouvant réagir chimiquement avec le polymère par chauffage. Un gaz est généralement généré lors de cette réaction, gaz qui est à l'origine de l'expansion du mélange. Ces composés chimiques sont connus de l'homme du métier. On peut par exemple citer le polycarbonate, qui réagit avec le polyamide et se décompose pour générer du dioxyde de carbone. La réaction chimique intervient lors de l'étape a). Toute méthode connue de l'homme du métier pour préparer la composition peut alors être utilisée. On peut par exemple réaliser un mélange intime des poudres du polymère et du composé chimique, ou un mélange des granulés de polymère et des granulés du composé chimique. Le polymère peut également se présenter sous la forme de granulés, que l'on enrobe par le composé chimique. Un autre mode de préparation de la composition est l'empâtage des différents composés.

Il est également possible d'introduire le composé chimique dans le polymère à l'état fondu.

Selon l'invention, la température lors de l'étape a) doit être suffisante pour qu'il y ait réaction entre le polymère et le composé chimique, et génération de gaz.

Une combinaison des différents modes de réalisation décrits ci-dessus peuvent être mis en oeuvre pour préparer la composition expansible du procédé de l'invention.

La composition expansible peut comprendre des additifs tels que des surfactants, des nucléants comme le talc, des plastifiants etc. Ces additifs sont connus de l'homme du métier.

La composition expansible peut également comprendre d'autres composés, tels que des charges de renfort comme les fibres de verre, des matifiants comme le dioxyde de titane ou le sulfure de zinc, des pigments, des colorants, des stabilisants chaleur ou lumière, des agents bioactifs, des agents antisalissure, des agents antistatiques, des ignifugeants etc. Cette liste n'a aucun caractère exhaustif.

Dans le cadre de l'invention, l'étape a) est avantageusement réalisée dans un dispositif de malaxage pouvant générer une pression supérieure à la pression atmosphérique. L'étape a) est de préférence réalisée dans une extrudeuse, encore plus préférentiellement dans une extrudeuse bi-vis.

La composition expansible peut être préparée selon un mode décrit ci-dessus, puis introduite dans le dispositif d'extrusion mis en oeuvre lors de l'étape a). La composition peut être introduite sous forme solide ou liquide, par exemple à l'état fondu.

La composition expansible peut également être préparée *in situ* dans le même dispositif d'extrusion que celui mis en oeuvre lors de l'étape a), avant l'extrusion de la composition selon l'étape a).

Par exemple lorsque la composition expansible est conforme au premier ou au troisième mode de réalisation particulier décrits ci-dessus, le gaz ou respectivement le composé volatile peuvent être introduits dans le fourreau ou le piston du dispositif d'extrusion de l'étape a), comprenant le polymère de la composition expansible à l'état fondu.

L'étape a) qui consiste à extruder la composition à travers une filière pour réaliser l'expansion est mise en oeuvre d'une manière classique et connue de l'homme du métier.

L'étape b) consistant à refroidir et couper la matériau expansé, est avantageusement réalisée à l'aide d'un dispositif de granulation à coupe disposé à la sortie de la filière. Un tel dispositif de granulation est connu de l'homme du métier. Il comprend au moins un dispositif de coupe qui fait face à la plaque de filière à travers laquelle le polymère est extrudé, et un dispositif de refroidissement.

Le dispositif de coupe comprend généralement des couteaux, un porte-couteaux, et un moteur pour entraîner le porte-couteaux. Le porte-couteaux est habituellement rotatif.

Le dispositif de refroidissement peut consister en un dispositif de pulvérisation d'eau froide situé à proximité du dispositif de coupe et de la plaque de filière. C'est le cas des granulateurs à « coupe à chaud» connus de l'homme du métier. Le dispositif de coupe et la plaque filière peuvent également être disposés dans une chambre remplie d'eau. C'est le cas des granulateurs à « coupe en tête noyée » connus de l'homme du métier. Dans cette chambre remplie d'eau, l'eau est généralement en circulation et elle assure le refroidissement et le transport des perles de polymère formées au niveau du dispositif de coupe vers un sécheur. Le séchage peut être réalisé à l'aide d'une centrifugeuse qui sépare l'eau et les perles, ou à l'aide d'un dispositif de cyclonage.

De tels dispositifs de granulateurs à « coupe en tête noyée » sont par exemple décrits dans le brevet américain US 5 059103.

Le refroidissement du matériau expansé permet notamment de figer ce dernier.

L'eau du dispositif de refroidissement peut être remplacée par un autre liquide, généralement utilisé comme solvant.

Avantageusement, le refroidissement de l'étape b) est donc réalisé à l'aide d'un liquide, de préférence à l'aide d'eau.

La mise en oeuvre de tels granulateurs à « coupe en tête » dans le cadre de l'invention permet l'obtention de perles à base de polymère expansé et à peau continue. Elle permet également la fabrication de perles avec une bonne productivité.

La perle obtenue selon le procédé de l'invention présente avantageusement un diamètre inférieur ou égal à 10 mm, de préférence inférieur ou égal à 5 mm. La taille de la perle dépend de plusieurs paramètres ; elle dépend notamment du diamètre des trous de filière, du débit d'extrusion et de la fréquence de coupe.

La perle obtenue selon le procédé de l'invention présente avantageusement une masse volumique inférieure ou égale à 0,8 g/cm³, de préférence inférieure ou égale à 0,5 g/cm³, encore plus préférentiellement inférieure ou égale à 0,3 g/cm³. La masse volumique de la perle de l'invention est mesurée selon le protocole décrit dans la partie expérimentale.

Cette perle à base de polyamide ou de polyester présente un diamètre inférieur ou égal à 10 mm, de préférence inférieur ou égal à 5 mm.

La perle à base de polyamide ou de polyester de l'invention présente une masse volumique inférieure ou égale à 0,8 g/cm³, de préférence inférieure ou égale à 0,5 g/cm³, encore plus préférentiellement inférieure ou égale à 0,3 g/cm³. La masse volumique de la perle à base de polyamide ou de polyester de l'invention est mesurée selon le protocole décrit dans la partie expérimentale

Les perles à base de polymère expansé de l'invention peuvent être utilisées telles quelles dans de nombreux domaines, tels que le bâtiment ou l'aéronautique, comme structure d'allègement par exemple. Elles peuvent également être introduites dans un dispositif de moulage, par exemple en vue d'un moulage par thermocompression.

D'autres détails ou avantages de l'invention apparaîtront plus clairement à la vue des exemples donnés ci-dessous et en référence aux figures annexées, qui ne constituent pas une limitation à l'invention.

La figure 1 représente une vue de dessus de la perle de l'invention, observée au microscope à balayage.

La figure 2 représente une vue en coupe de la perle de l'invention, observée au microscope à balayage.

### Mesure de la masse volumique des perles

Le volume des perles est estimé par déplacement d'eau selon le protocole suivant :
Une fiole conique jaugée de volume adapté à la taille des perles est remplie d'eau jusqu'au bord du col, ce qui correspond à un volume V1 d'eau. La masse de l'ensemble fiole+eau est mesurée, on la note M1. L'eau de la fiole est évacuée. La fiole est remplie par une masse m1 déterminée de perles. La fiole est à nouveau remplie d'eau jusqu'au bord du col. Le remplissage est effectué en s'assurant à l'aide d'une grille métallique que le volume rempli est identique à V1 malgré la présence de perles à la surface. La masse de l'ensemble fiole+eau+perle est mesurée, elle est notée M2. La masse volumique de la perle est alors égale à [m1/(M1-M2+m1)]*dₑₐᵤ en g/cm³ (dₑₐᵤ=1g/cm³)

### EXEMPLES

### Exemple 1

Un mélange de granulés de PA66 commercialisé par la société Rhodia Technical Fibers sous la référence 132J00® (90% p/p) et de granulés de polycarbonate commercialisé par la société Bayer sous la référence Makrolon 2207® (10% p/p), est introduit dans une extrudeuse bivis commercialisée par la société Leistriz sous la référence TSA-EMP 26-35®, équipée d'un système de coupe en tête noyé commercialisé par la société Gala sous la référence LPU Mod 5 . Le profil de température sur les éléments de chauffe de la bi-vis sont (en °C) 270-280-280-280-280-280, l'adapteur est maintenu à 272°C et la filière chauffée à 330°C. La vitesse de rotation des vis est fixée à 201 tours.min⁻¹. Le débit d'extrusion est de 15kg/h. La filière est composée d'un seul orifice de diamètre 2.4 mm. L'eau de coupe est maintenue à 85°C.

Le porte-couteaux comporte deux couteaux et la fréquence de coupe est 2800 tours/min On obtient par cette méthode des granulés de polyamide expansés rigides de densité 0.6 g/cm³.

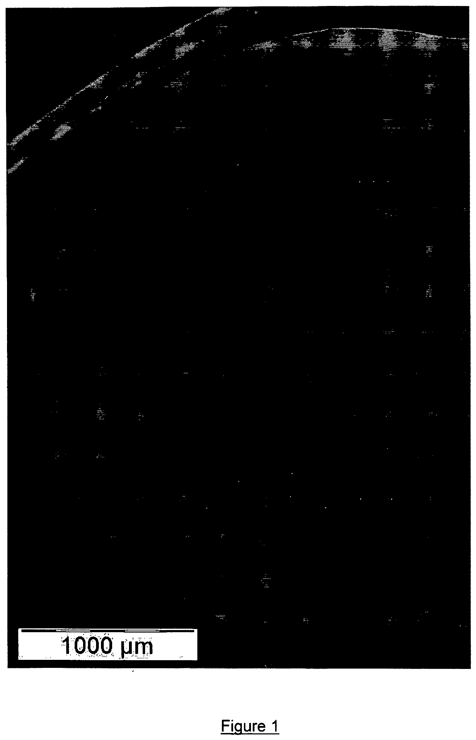

La figure 1 représente une vue de dessus de la perle de l'invention, observée au microscope à balayage. On peut observer sur cette figure la peau continue de la perle

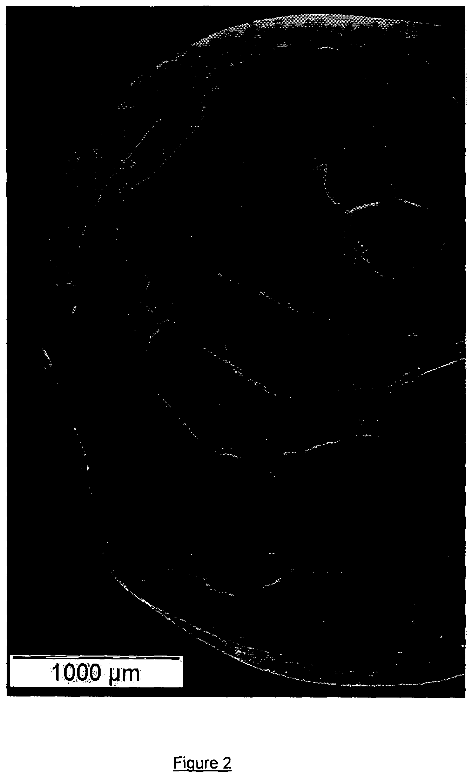

La figure 2 représente une vue en coupe de la perle de l'invention, observée au microscope à balayage. On peut observer sur cette figure la peau continue de la perle et sa porosité interne.

### Exemple 2

Un mélange de granulés de PET commercialisé par la société Wellman sous la référence Permaclear VI 84® (85% p/p) et de granulés de polycarbonate commercialisés par la société GE Plastics sous la référence Lexan 121 - 111® (15%p/p) est introduit dans une extrudeuse bivis commercialisée par la société Leistriz sous la référence TSA-EMP 26-35®, équipée d'un système de coupe en tête noyé commercialisé par la société Gala sous la référence LPU Mod 5. Le profil de température sur les éléments de chauffe de la bi vis sont (en °C) 280-300-315-335-275, l'adapteur est maintenu à 272°C et la filière chauffée à 330°C. La vitesse de rotation des vis est fixée à 200 tours.min⁻¹. Le débit d'extrusion est de 15kg/h. La filière est composée d'un seul orifice de diamètre 2.4 mm. L'eau de coupe est maintenue à 85°C. Le porte-couteaux comporte deux couteaux et la fréquence de coupe est 2800 tours/min

On obtient par cette méthode des granulés de PET expansés rigides de densité 0.7 g/cm³.

## Revendications

1. Procédé de préparation d'une perle ayant un diamètre inférieur ou égal à 10 mm et ayant une masse volumique inférieure ou égale à 0,8 g/cm³, à base de polyamide expansé et à peau continue, comprenant les étapes successives suivantes:
a) extruder à travers une filière une composition expansible comprenant un polyamide et un agent d'expansion, a l'état fondu, pour réaliser l'expansion
b) refroidir et couper le matériau expansé obtenu en sortie de filière à l'aide d'un couteau, **caractérise en ce que** l'étape b) est réalisée à l'aide d'un dispositif de granulation à coupe disposé à la sortie de la filière comprenant au moins un dispositif de coupe qui fait face à la plaque de filière à travers laquelle le polyamide est extrudé, et un dispositif de refroidissement, dans lequel le dispositif de coupe et la plaque filière sont disposés dans une chambre remplie d'eau
et **caractérisé en ce que** l'agent d'expansion est un compose chimique pouvant réagir chimiquement avec le polyamide par chauffage en générant un gaz.

2. Procédé selon la revendication 1, **caractérisé en ce que** la composition expansible comprend un nucléant et/ou un surfactant et/ou un plastifiant

3. Procédé selon l'une des revendications précédentes, **caractérisé en ce que** la composition expansible comprend des charges de renfort telles que des fibres de verre, des matifiants, des pigments, des colorants, des stabilisants chaleur ou lumière, des agents bioactifs, des agents antisalissure, et/ou des agents antistatiques.

4. Procédé selon l'une des revendications précédentes, **caractérisé en ce que** la perle obtenue présente un diamètre inférieur ou égal à 5 mm.

5. Procédé selon l'une des revendications précédentes, **caractérisé en ce que** la perle obtenue présente une masse volumique inférieure ou égale à 0,5 g/cm³, encore plus préférentiellement inférieure ou égale à 0,3 g/cm³.

## Patentansprüche

1. Verfahren zur Herstellung einer Perle mit einem Durchmesser kleiner gleich 10 mm und einer volumenbezogenen Masse kleiner gleich 0,8 g/cm³ auf Basis von expandiertem Polyamid mit kontinuierlicher Haut, das die folgenden aufeinanderfolgenden Schritte umfasst:
a) Extrudieren einer expandierbaren Zusammensetzung, die ein Polyamid und ein Expandiermittel umfasst, in schmelzflüssigem Zustand durch eine Düse zur Bewirkung der Expansion,
b) Abkühlen und Schneiden des erhaltenen expandierten Materials am Düsenausgang mit einem Messer, wobei der Schritt b) mit einer am Ausgang der Düse angeordneten Schneidgranuliervorrichtung mit mindestens einer Schneidvorrichtung, die der Düsenplatte, durch die das Polyamid extrudiert wird, gegenüberliegt, und einer Abkühlvorrichtung durchgeführt wird, wobei die Schneidvorrichtung und die Düsenplatte in einer mit Wasser gefüllten Kammer angeordnet sind,
und **dadurch gekennzeichnet, dass** es sich bei dem Expandiermittel um eine chemische Verbindung handelt, die durch Erhitzen unter Erzeugung eines Gases chemisch mit dem Polyamid reagieren kann.

2. Verfahren nach Anspruch 1, **dadurch gekennzeichnet, dass** die expandierbare Zusammensetzung ein Nukleierungsmittel und/oder ein Tensid und/oder einen Weichmacher umfasst.

3. Verfahren nach einem der vorhergehenden Ansprüche, **dadurch gekennzeichnet, dass** die expandierbare Zusammensetzung verstärkende Füllstoffe wie Glasfasern, Mattierungsmittel, Pigmente, Farbmittel, Wärme- oder Lichtstabilisatoren, bioaktive Mittel, schmutzabweisende Mittel und/oder Antistatika umfasst.

4. Verfahren nach einem der vorhergehenden Ansprüche, **dadurch gekennzeichnet, dass** die erhaltene Perle einen Durchmesser kleiner gleich 5 mm aufweist.

5. Verfahren nach einem der vorhergehenden Ansprüche, **dadurch gekennzeichnet, dass** die erhaltene Perle eine volumenbezogenen Masse kleiner gleich 0,5 g/cm³ und noch weiter bevorzugt kleiner gleich 0,3 g/cm³ aufweist.

## Claims

1. Process for preparing a pearl having a diameter of less than one or equal to 10mm and having a mass per unit volume of less than or equal to 0.8 g/cm³ based on expanded polyamide and having a continuous skin, comprising the following successive steps:
a) extruding through a die an expandable composition comprising a thermoplastic polyamide and an expanding agent, in melt form, to produce the expansion
b) cooling and chopping the expanded material obtained at the die outlet using a knife, a diameter of less than or equal to 10 mm and having a mass per unit volume of less than or equal to 0.8 g/cm³,
step b) being performed using a granulating chopping device arranged at the die outlet, comprising at least one chopping device opposite the die plate, through which the polyamide is extruded, and a cooling device, in which the chopping device and the die plate are arranged in a water-filled chamber
and **characterized in that** the expanding agent is a chemical compound that can react chemically with the polyamide by heating, to generate a gas.

2. Process according to Claim 1, **characterized in that** the expandable composition comprises a nucleating agent and/or a surfactant and/or a plasticizer.

3. Process according to either of the preceding claims, **characterized in that** the expandable composition comprises reinforcing fillers like glass fibers, matting agents, pigments, dyes, heat or light stabilizers, bioactive agents, antisoiling agents and/or antistatic agents.

4. Process as claimed in one of the preceding claims, **characterized in that** the pearl obtained has a diameter of less than or equal to 5 mm.

5. Process as claimed in one of the preceding claims, **characterized in that** the pearl obtained has a mass per unit volume of less than or equal to 0.5 g/cm³ and even more preferentially less than or equal to 0.3 g/cm³.
